# FASCICULE DE BREVET EUROPEEN

(11) **EP 2 165 601 B1**
(45) Date de publication et mention de la délivrance du brevet: **14.11.2012**
(21) Numéro de dépôt: 09305864.2
(22) Date de dépôt: 17.09.2009
(51) Int. Cl.: A01K 5/00

(54) **Utilisation d'un mélange de matière plastique et de sable pour la fabrication de contenant d'alimentation et/ou d'abreuvement pour animaux, et contenant constitué d'un tel mélange**
Verwendung einer Mischung aus Kunststoff und Sand zur Herstellung von Futter- und Wassernapf, und Napf aus einer solchen Mischung
Use of a mixture of plastic material and sand to manufacture animal feeding and/or watering container, and container made of such a mixture

(30) Priorité: 18.09.2008 FR 0856304
(43) Date de publication de la demande: 24.03.2010
(73) Titulaire: La Buvette, 08090 Tournes (FR)
(72) Inventeur: Martin, Jean, F-08000, CHARLEVILLE-MEZIERES (FR)
(74) Mandataire: Rhein, Alain

(56) Documents cités:
- WO-A-2008/060086
- DE-A1- 2 549 267
- FR-A- 2 295 695

## Description

L'invention concerne l'utilisation d'un mélange composé d'au moins une matière plastique et de sable pour la fabrication de contenant d'alimentation et/ou d'abreuvement pour les animaux.

L'invention concerne encore un contenant d'alimentation et/ou d'abreuvement pour les animaux, constitué d'un tel mélange composé d'au moins une matière plastique et de sable.

La présente invention entre dans le domaine de la conception d'éléments destinés à l'usage, en particulier alimentaire, d'animaux. Encore plus particulièrement, l'invention entre dans le domaine de la conception de dispositifs et contenants d'alimentation et/ou d'abreuvement pour les animaux.

Les contenants à usage alimentaire pour les animaux, tels que par exemple les abreuvoirs, sont parfois fabriqués en polyéthylène. Ce matériau plastique est par ailleurs aisément mis en forme par rotomoulage.

Cependant, il peut s'avérer à l'usage que les animaux grignotent ce matériau, ce qui occasionne pour l'éleveur des coûts conséquents de réparation voire de remplacement de son matériel. De plus, en incitant, ainsi, à grignoter leur mangeoire ou leur abreuvoir, certains animaux entravés ou en box, ont tendance à développer des tocs.

On connait par le document DE 25 49 267 un procédé pour la fabrication de contenants de type mangeoire ou bac pour la récupération des excréments d'animaux dans les étables. Il s'agit plus particulièrement de concevoir ce contenant à la manière d'une cuvette que l'on vient intégrer dans la maçonnerie.

Quant aux matériaux composant ce contenant, ils se présentent sous forme d'un mélange d'un matériau synthétique avec une charge minérale, plus particulièrement du sable. Ce matériau, défini comme étant un béton synthétique, est présenté comme ayant une bonne tenue à l'abrasion, ainsi qu'une bonne tenue aux matériaux agressifs que le contenant est destiné à recevoir. Il est décrit une composition préférée de ce matériau, à savoir : 12 % de liant, autrement dit de matière synthétique pour 88% de matière minérale elle-même composée de :
- 22 % de sable de grain fin inférieur à 0,1mm ;
- 23 % de sable dont les grains sont compris entre 0,1 et 0,3mm ;
- 20 % de sable dont les grains sont compris entre 1 et 3mm ;
- et enfin 35 % de sable dont les grains sont compris entre 2 et 5mm.

Il est, ici, tenté de résoudre un problème de tenue dans le temps et aux agents agressifs que constituent les aliments ou les déjections animales, selon qu'il est question d'une mangeoire ou du sol d'une logette, ceci grâce à un matériau de substitution aux matériaux classiquement utilisés, à savoir le béton ou le carrelage qui, selon le cas, sont sensibles à l'acidité des aliments ou des excréments ou sont de mise en oeuvre complexe pour une tenue dans le temps toute relative.

L'on connait en outre, par le document FR-2.295.695, un revêtement pour mangeoires en tôle, destinées à la distribution d'aliments pour animaux et un procédé pour l'application de ce revêtement sur de telles mangeoires.

Tout particulièrement, il est fait référence aux mangeoires en tôle galvanisée qui, sous l'influence de différents paramètres, sont soumises à une corrosion rapide nécessitant des interventions de réparation fréquente.

Pour remédier à cet inconvénient, il est prévu de revêtir les faces intérieures d'une mangeoire d'une couche de matière plastique. A cette dernière peuvent être mélangés des sels d'antimoine ou de la poudre de quartz de silice ou de marbre finement pulvérisés pour augmenter considérablement la résistance des mangeoires à l'abrasion, laquelle est provoquée par le passage des aliments et le frottement des chariots distributeurs.

C'est dans le cadre d'une démarche inventive que l'on a imaginé une solution efficace permettant la conception d'une mangeoire en matériau synthétique dans son intégralité, tout en étant en mesure de répondre à ce problème de grignotage, qui préserve la santé des animaux et le matériel de l'éleveur à un coût de production très raisonnable.

A cet effet, l'invention telle qu'énoncée à la revendication 1 concerne l'utilisation d'un mélange composé d'au moins une matière plastique et de sable abiogène, présentant :
- une dureté comprise entre 5 et 9 sur l'échelle de Mohs,
- un coefficient d'angulosité supérieur ou égal à 1 ;
- une teneur en oxyde de silicium supérieure ou égale à 75% ;
- et une teneur en carbonate de calcium inférieure à 2% ;
- pour la fabrication de contenants d'alimentation et/ou d'abreuvement pour les animaux, pour conférer des propriétés anti-grignotage auxdits contenants.

Tout particulièrement, la taille des particules de sable dans ce mélange est comprise entre 200 et 1000 µm, préférentiellement 300 à 500 µm pour fabriquer de tels contenants par rotomoulage.

Les avantages qui découlent de la présente invention consistent, essentiellement, en la possibilité de fabriquer un contenant d'alimentation et/ou d'abreuvement présentant des propriétés dissuasives très efficaces pour les animaux quant à un comportement de grignotage. Par ailleurs, ces contenants peuvent être obtenus en mettant en oeuvre un procédé de fabrication très simple et très économique, ne présentant pas de surcoûts de fabrication.

La présente invention sera mieux comprise à la lecture de la description qui va suivre, se rapportant à un exemple de réalisation.

La présente invention entre dans le domaine de la conception d'éléments destinés à être laissés au contact d'un animal et/ou destinés à l'usage, en particulier alimentaire, dudit animal. Encore plus particulièrement, l'invention entre dans le domaine de la conception de contenants d'alimentation et/ou d'abreuvement pour les animaux.

Par usage alimentaire, il est entendu tous les usages associés à la prise de nourriture et de boisson, y compris d'eau. En particulier, l'utilisation selon l'invention pourra être appliquée à la fabrication d'abreuvoirs.

L'invention consiste en l'utilisation d'un mélange composé d'au moins une matière plastique et de sable dans la fabrication d'un tel contenant d'alimentation et/ou d'abreuvement, donc destiné à l'usage alimentaire d'un animal, le mélange conférant des propriétés anti-grignotage audit élément.

Le sable utilisé est de type abiogène.

Par sable abiogène, on entend un sable qui provient de la désagrégation mécanique et de l'abrasion de roches, par opposition au sable biogène qui provient de résidus de coquilles d'animaux marins et qui contient beaucoup de carbonate de calcium. Par exemple, du sable issu de la désagrégation de quartz est un sable abiogène.

Du sable de quartz peut ainsi être utilisé lors de la mise en oeuvre de l'invention.

Selon l'invention, le sable utilisé a une teneur en oxyde de silicium supérieure ou égale à 75%, préférentiellement supérieure ou égale à 95%. Sa teneur en carbonate de calcium est inférieure à 2%, préférentiellement inférieure à 1%.

Il possède une dureté comprise entre 5 et 9 sur l'échelle de Mohs, préférentiellement de l'ordre de 7.

le coefficient d'angulosité du sable utilisé est supérieur ou égal à 1.

Quand à sa densité, elle est choisie, selon l'invention, supérieure ou égale à 1,2 sur résidu sec, préférentiellement de l'ordre de 1,5.

Préférentiellement, la matière plastique utilisée est du type rotomoulable. Selon un mode particulier de réalisation, il est utilisé du polyéthylène.

L'invention concerne encore un contenant d'alimentation et/ou d'abreuvement pour les animaux, constitué d'un mélange composé d'au moins une matière plastique et de sable, caractérisé par le fait que le sable est du type abiogène, présentant une dureté comprise entre 5 et 9 sur l'échelle de Mohs, un coefficient d'angulosité supérieur ou égal à 1 et une teneur en oxyde de silicium supérieure ou égale à 75% et une teneur en carbonate de calcium inférieure à 2%, et en ce que le rapport final de masse entre le sable et le la matière plastique est supérieur ou égal à 0,20

Selon l'invention, l'incorporation de sable à un matériau plastique, tel que du polyéthylène, avant mise en forme, en particulier par rotomoulage, dudit mélange, permet d'obtenir des éléments moulés dont l'une des caractéristiques surprenantes est d'être déplaisante au grignotage pour les animaux. De ce fait, ce comportement non souhaitable se trouve fortement limité.

Plus particulièrement, le sable est incorporé à un matériau plastique se présentant en poudre, avant mise en forme, en particulier par rotomoulage, du mélange ainsi obtenu.

L'incorporation du sable à ce matériau plastique se fait préférentiellement de manière à ce que le rapport final de masse entre le sable et le polyéthylène soit supérieur ou égal à 0,20, préférentiellement à 0,35. Dans un rapport trop faible, la quantité de sable peut être insuffisante pour un effet « anti-grignotage » optimal.

Selon une autre particularité, ce rapport est compris entre 0,20 et 0,60, préférentiellement entre 0,35 et 0,40.
Dans un contexte de mise en oeuvre de la technique du rotomoulage, qui est une technique de mise en forme des matières plastiques largement utilisée pour la fabrication de contenants d'alimentation et/ou d'abreuvement pour les animaux, on utilisera préférentiellement un sable dont la taille des grains est comprise entre 200 et 1000 µm, préférentiellement entre 300 à 500 µm. En effet, les grains de sable se doivent d'être suffisamment gros pour avoir un effet dissuasif optimal, tout en restant d'une taille compatible avec une répartition homogène dans le moule. Des grains trop lourds auront en effet tendance à migrer fortement vers l'intérieur du moule sous l'effet de leur poids lors du rotomoulage.

Par ailleurs, l'utilisation selon ce mode particulier de réalisation mettant en oeuvre une étape de rotomoulage n'affecte pas les qualités mécaniques attendues du polyéthylène, permettant de produire des pièces de qualité similaire à celles produites sans adjonction de sable. L'invention ne résulte pas non plus en une augmentation importante des coûts de production des pièces ainsi fabriquées.

Selon un autre avantage, l'invention préserve le goût des aliments ou boissons pouvant venir remplir les pièces fabriquées selon l'invention.

## Revendications

1. Utilisation d'un mélange composé d'au moins une matière plastique et de sable abiogène, présentant une dureté comprise entre 5 et 9 sur l'échelle de Mohs, un coefficient d'angulosité supérieur ou égal à 1 et une teneur en oxyde de silicium supérieure ou égale à 75% et une teneur en carbonate de calcium inférieure à 2%, pour la fabrication de contenants d'alimentation et/ou d'abreuvement pour les animaux, pour conférer des propriétés anti-grignotage auxdits contenants.

2. Utilisation selon la revendication 1, **caractérisé en ce que** le sable possède une teneur en oxyde de silicium supérieure ou égale 85% et une teneur en carbonate de calcium inférieure à 1%.

3. Utilisation selon l'une des revendications 1 et 2, **caractérisée en ce que** le sable présente une dureté de l'ordre de 7.

4. Utilisation selon l'une des revendications 1 à 3, **caractérisée en ce que** le sable a une densité supérieure ou égale à 1,2, préférentiellement de l'ordre de 1,5 sur résidu sec.

5. Utilisation selon l'une des revendications 1 à 4, **caractérisée en ce que** la matière plastique est du type rotomoulable.

6. Utilisation selon l'une des revendications 1 à 5, **caractérisée en ce que** la matière plastique est du polyéthylène.

7. Utilisation selon la revendication 5 ou 6, **caractérisée en ce que** le sable est incorporé à la matière plastique dans un rapport de 0,20 à 0,60, préférentiellement de 0,35 à 0,40 en masse.

8. Utilisation selon l'une des revendications 1 à 7, **caractérisée en ce que** l'élément à fabriquer est obtenu par rotomoulage et que la taille des particules de sable est comprise entre 200 et 1000 µm, préférentiellement entre 300 à 500 µm.

9. Contenant d'alimentation et/ou d'abreuvement pour les animaux, constitué d'un mélange composé d'au moins une matière plastique et de sable du type abiogène, **caractérisé par le fait que** le mélange présente une dureté comprise entre 5 et 9 sur l'échelle de Mohs, un coefficient d'angulosité supérieur ou égal à 1 et une teneur en oxyde de silicium supérieure ou égale à 75% et une teneur en carbonate de calcium inférieure à 2%, et en ce que le rapport final de masse entre le sable et le la matière plastique est supérieur ou égal à 0,20.

10. Contenant d'alimentation et/ou d'abreuvement pour les animaux, selon la revendication 9, **caractérisé par le fait que** le rapport final de masse entre le sable et le la matière plastique est compris entre 0,35 et 0,40.

11. Contenant d'alimentation et/ou d'abreuvement pour les animaux, selon la revendication 9 ou 10, **caractérisé par le fait que** la taille des particules de sable est comprise entre 200 et 1000 µm, préférentiellement entre 300 à 500 µm.

## Claims

1. Use of a mixture formed of at least one plastic material and abiogenic sand, which has a hardness from 5 to 9 according to the hardness scale of Mohs, an angulosity coefficient higher than or equal to 1 and a silicon oxide content higher than or equal to 75% and a calcium carbonate content of less than 2%, for manufacturing animal feeding and/or watering containers, in order to provide said containers with nibbling-preventing properties.

2. Use according to claim 1, wherein the sand has a silicon oxide content higher than or equal to 85% and a calcium carbonate content of less than 1%.

3. Use according to one of claims 1 and 2, wherein the sand has a hardness of about 7.

4. Use according to one of claims 1 to 3, wherein the sand has a density higher than or equal to 1.2, preferably of 1.5.

5. Use according to one of claims 1 to 4, wherein the plastic material is of the rotomouldable type.

6. Use according to one of claims 1 to 5, wherein the plastic material is polyethylene.

7. Use according to claim 5 or 6, wherein the sand is incorporated into the plastic material in a mass relationship from 0.20 to 0.60, preferably from 0.35 to 0.40.

8. Use according to one of claims 1 to 7, wherein the element to be manufactured is achieved by rotomoulding, and that the size of the sand particles is from 200 to 1000 µm, preferably frolm 300 to 500 µm.

9. Animal feeding and/or watering container formed of a mixture comprised of at least one plastic material and abiogenic sand, wherein the mixture has a hardness from 5 to 9 according to the hardness scale of Mohs, an angulosity coefficient higher than or equal to 1 and a silicon oxide content higher than or equal to 75% and a calcium carbonate content of less than 2%, and wherein the final mass relationship between the sand and the plastic material is higher than or equal to 0.20.

10. Animal feeding and/or watering container according to claim 9, wherein the final mass relationship between the sand and the plastic material is from 0.35 to 0.40.

11. Animal feeding and/or watering container according to claim 9 or 10, wherein the size of the sand particles is from 200 to 1000 µm, preferably from 300 to 500 µm.

## Patentansprüche

1. Verwendung einer Mischung, bestehend zumindest aus einem Kunststoff und abiogenem Sand, die eine Härte zwischen 5 und 9 nach der Mohsschen Härteskala, einen Winkligkeits-Koeffizienten höher als oder gleich 1 und einen Siliziumoxidgehalt höher als oder gleich 75% und einen Kalziumkarbonatgehalt niedriger als 2% aufweist, für die Herstellung von Futter- und/oder Wassernäpfen für die Tiere, um den besagten Näpfen der allmählichen Zerstörung entgegenwirkende Eigenschaften zu verleihen.

2. Verwendung nach Anspruch 1, **dadurch gekennzeichnet, dass** der Sand einen Siliziumoxidgehalt höher als oder gleich 85% und einen Kalziumkarbonatgehalt niedriger als 1 % besitzt.

3. Verwendung nach einem der Ansprüche 1 und 2, **dadurch gekennzeichnet, dass** der Sand eine Härte der Größenordnung von 7 aufweist.

4. Verwendung nach einem der Ansprüche 1 bis 3, **dadurch gekennzeichnet, dass** der Sand eine Trockensubstanzdichte höher als oder gleich 1,2, vorzugsweise von 1,5, aufweist.

5. Verwendung nach einem der Ansprüche 1 bis 4, **dadurch gekennzeichnet, dass** der Kunststoff der Art schleudergussfähig ist.

6. Verwendung nach einem der Ansprüche 1 bis 5, **dadurch gekennzeichnet, dass** der Kunststoff Polyäthylen ist.

7. Verwendung nach Anspruch 5 oder 6, **dadurch gekennzeichnet, dass** der Sand zu dem Kunststoff in einem Verhältnis von 0,20 bis 0,60, vorzugsweise von 0,35 bis 0,40 in Massa zugesetzt ist.

8. Verwendung nach einem der Ansprüche 1 bis 7, **dadurch gekennzeichnet, dass** das herzustellende Element durch Schleuderguss erhalten wird, und dass die Größe der Sandpartikel zwischen 200 und 1000 µm, vorzugsweise zwischen 300 bis 500 µm, liegt.

9. Futter- und/oder Wassernapf für die Tiere aus einer Mischung, die zumindest aus Kunststoff und aus Sand abiogener Art besteht, **dadurch gekennzeichnet, dass** die Mischung eine Härte zwischen 5 und 9 nach der Mohsschen Härteskala, einen Winkligkeits-Koeffizienten höher als oder gleich 1 und einen Siliziumoxidgehalt höher als oder gleich 75% und einen Kalziumkarbonatgehalt niedriger als 2% aufweist, und dadurch, dass das finale Massenverhältnis zwischen dem Sand und dem Kunststoff höher als oder gleich 0,20 ist.

10. Futter- und/oder Wassernapf für die Tiere nach Anspruch 9, **dadurch gekennzeichnet, dass** das finale Massenverhältnis zwischen dem Sand und dem Kunststoff im Bereich zwischen 0,35 und 0,40 liegt.

11. Futter- und/oder Wassernapf für die Tiere nach Anspruch 9 oder 10, **dadurch gekennzeichnet, dass** die Größe der Sandpartikel zwischen 200 und 1000 µm, vorzugsweise im Bereich zwischen 300 bis 500 µm, liegt.
